# EUROPEAN PATENT SPECIFICATION

(11) **EP 3 879 470 B1**
(45) Date of publication and mention of the grant of the patent: **03.05.2023**
(21) Application number: 20210052.5
(22) Date of filing: 26.11.2020
(51) Int. Cl.: G06Q 10/06, G06Q 50/04, G06F 16/2455, G06F 3/06, G05B 17/00, G05B 23/00

(54) **DATA MANAGEMENT SYSTEM AND DATA MANAGEMENT METHOD**
DATENVERWALTUNGSSYSTEM UND DATENVERWALTUNGSVERFAHREN
SYSTÈME ET PROCÉDÉ DE GESTION DES DONNÉES

(30) Priority: 13.03.2020 JP 2020044562
(43) Date of publication of application: 15.09.2021
(73) Proprietor: YOKOGAWA ELECTRIC CORPORATION, Musashino-shi Tokyo 180-8750 (JP)
(72) Inventor: EMA, Nobuaki, Musashino-shi, Tokyo 180-8750 (JP); YOSHIDA, Yoshitaka, Musashino-shi, Tokyo 180-8750 (JP)
(74) Representative: Winter, Brandl - Partnerschaft mbB

(56) References cited:
- US-A1- 2017 091 252
- US-A1- 2020 026 435

## Description

### BACKGROUND

### 1. TECHNICAL FIELD

The present invention relates to a data management system and a data management method.

### 2. RELATED ART

Japanese Patent Application Publication JP 2020- 016 938 A describes that "a data management apparatus 1 is configured to delete sensor data according to a saving priority order ...".

Document US 2017/091252 A1 discloses a computer-implemented method for storing and reconciling, in a database, sensor data from a plurality of sensor, wherein the method comprises searching the database for the storage entry to be deleted according to a predefined criterion based on a reliability of the sensor identified by the sensor identifier using the sensor data and a source identifier and, if a storage entry to be deleted according to the criterion is found, deleting the respective storage entry.

Document US 2020/026435 A1 relates to a data management device which is capable of calculating an evaluation index based on sensor data and which comprises a sensor data deletion unit which determines saving priority of the sensor data based on a degree of change in the evaluation index and deleted the sensor data in accordance with the saving priority.

### Object

It is an object of the present invention to provide a system and a method with which even when deleting measurement data of sensors, a high accuracy can be maintained.

### Solution to the object

This object is solved by the subject matters of claims 1 and 7. Further aspects are defined in the subclaims.

### BRIEF DESCRIPTION OF THE DRAWINGS

Fig. 1 shows an example of a block diagram of a data management system 100 according to an aspect of the background of the present invention.
Fig. 2 shows an example of measurement data managed by the data management system 100 according to the aspect of the background of the present invention.
Fig. 3 shows an example of a flow in which the data management system 100 according to the aspect of the background of the present invention deletes the measurement data.
Fig. 4 shows an example of a flow in which the data management system 100 according to the aspect of the background of the present invention updates a priority.
Fig. 5 shows an example of a block diagram of the data management system 100 according to en embodiment of the present invention.
Fig. 6 shows an example of a computer 2200 in which aspects of the present invention may be wholly or partly embodied.

### DESCRIPTION OF ASPECTS AND AN EXEMPLARY EMBODIMENT

Hereinafter, the present invention is described through an aspect of the background of the present invention and an embodiment. However, the aspects and embodiments described below do not limit the invention defined in the claims. Also, all combinations of features described in the embodiment are not necessarily essential to solutions of the invention.

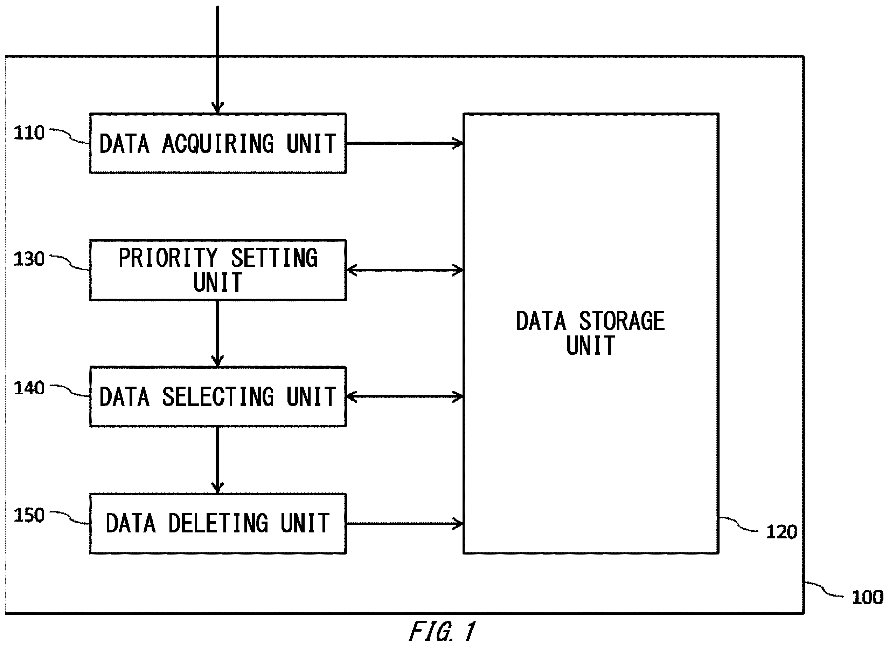

Fig. 1 shows an example of a block diagram of a data management system 100 according to an aspect of the background of the present invention. The data management system 100 according to the present aspect is configured to acquire and record measurement data from a plurality of sensors. Then, the data management system 100 is configured to set a priority for each sensor based on the measurement data, and selectively delete the recorded measurement data according to the priority.

In the present aspect, an example is shown where the data management system 100 is configured to manage measurement data acquired from a plurality of sensors provided in a plant. However, it is not limited thereto. The data management system 100 may be configured to manage data from sensors provided in any different places from the plant.

The data management system 100 may be a computer such as a PC (personal computer), a tablet computer, a smartphone, a workstation, a server computer, or a general purpose computer, or may be a computer system in which a plurality of computers are connected to each other. Such computer system is also a computer in a broad sense. Moreover, the data management system 100 may be implemented by one or plurality of virtual computer environments that can be executed in a computer. Instead, the data management system 100 may be a dedicated computer designed for management of data, or may be a dedicated hardware implemented by a dedicated circuit. Moreover, when the data management system 100 can be connected to the Internet, the data management system 100 may be implemented by a cloud computing.

The data management system 100 includes a data acquiring unit 110, a data storage unit 120, a priority setting unit 130, a data selecting unit 140, and a data deleting unit 150. Note that each of these blocks is a functional block functionality separated, and may not necessarily be consistent with an actual device configuration. That is, even if shown as one block in Fig. 1, the block may not necessarily be configured by one device. Moreover, even if shown as separate blocks in Fig. 1, those blocks may not necessarily be configured by separate devices.

The data acquiring unit 110 is configured to acquire, from each of the plurality of sensors, measurement data generated by measuring a measurement target. As an example, the data acquiring unit 110 may be a communication unit and, for example, is configured to acquire the measurement data from each of the plurality of sensors in time series, via a communication network.

Such communication network may be a network connecting a plurality of computers. For example, the communication network may be a global network interconnecting a plurality of computer networks, and, as an example, the communication network may be the Internet using the Internet Protocol or the like. Instead, the communication network may be implemented by a dedicated line.

Note that, in the above description, an example is shown where the data acquiring unit 110 is configured to acquire the measurement data from each of the plurality of sensors via the communication network.

Such plurality of sensors here can acquire measurement data generated by measuring a measurement target. For example, the plurality of sensors may be sensors (for example, process control (measuring) sensor) installed in an OT (Operational Technology) region or IoT (Internet of Things) sensors, and, as an example, may be industrial sensors connected with or integrally configured with one or plurality of field devices provided in the plant.

Such plant here may be, for example, besides an industrial plant such as a chemical plant, a plant for managing and controlling a wellhead or its surrounding area of a gas field, an oil field or the like, a plant for managing and controlling power generation such as hydraulic power generation, thermal power generation and nuclear power generation, a plant for managing and controlling energy harvesting such as solar photovoltaic generation, wind power generation or the like, and a plant for managing and controlling water and sewerage, a dam or the like.

Moreover, a field device provided in such plant may be, for example, a pressure gauge, a flow meter, a sensor device such as a temperature sensor, a valve device such as a flow control valve or an on-off valve, an actuator device such as a fan or a motor, an imaging device such as a camera or a video camera for capturing a situation or an object in the plant, an audio device such as a microphone or a speaker for collecting noises or the like in the plant or emitting an alarm or the like, and a location detection device for outputting location information of each device, or the like.

Therefore, the data acquiring unit 110 may acquire from each of the plurality of field devices or the like, as the measurement data, for example, measurement data generated by measuring by the sensor itself or measurement data measured in field devices such as a temperature, pressure, a fluid flow, acceleration, a magnetic field, a location, a camera image, switching on/off data, a sound, and any combination thereof. Moreover, the data acquiring unit 110 may acquire, as the measurement data, a value generated by using a formula based on these data. The data acquiring unit 110 is configured to supply the measurement data acquired from each of the plurality of sensors to the data storage unit 120.

The data storage unit 120 is configured to record the measurement data. The data storage unit 120 may be configured to record for each sensor in time series the measurement data from the plurality of sensors supplied from the data acquiring unit 110.

The priority setting unit 130 may be able to access the data storage unit 120, and is configured to view the measurement data from the plurality of sensors recorded in the data storage unit 120. Then, the priority setting unit 130 is configured to set a priority to be given to each of the plurality of sensors, based on the measurement data acquired from each of the plurality of sensors. This will be described below. The priority setting unit 130 is configured to supply information related to the set priority to the data selecting unit 140.

The data selecting unit 140 is configured to refer to information related to the priority supplied from the priority setting unit 130, when deleting the measurement data recorded in the data storage unit 120. Then, the data selecting unit 140 is configured to select data to be deleted from among the measurement data, according to the priority for each of the plurality of sensors. For example, the data selecting unit 140 may preferentially select the measurement data acquired from a sensor with a low priority as the data to be deleted. The data selecting unit 140 is configured to supply information related to the selected data to be deleted to the data deleting unit 150.

The data deleting unit 150 is configured to refer to the information related to the data to be deleted supplied from the data selecting unit 140. Then, the data deleting unit 150 is configured to delete the measurement data selected as the data to be deleted among the measurement data recorded in the data storage unit 120.

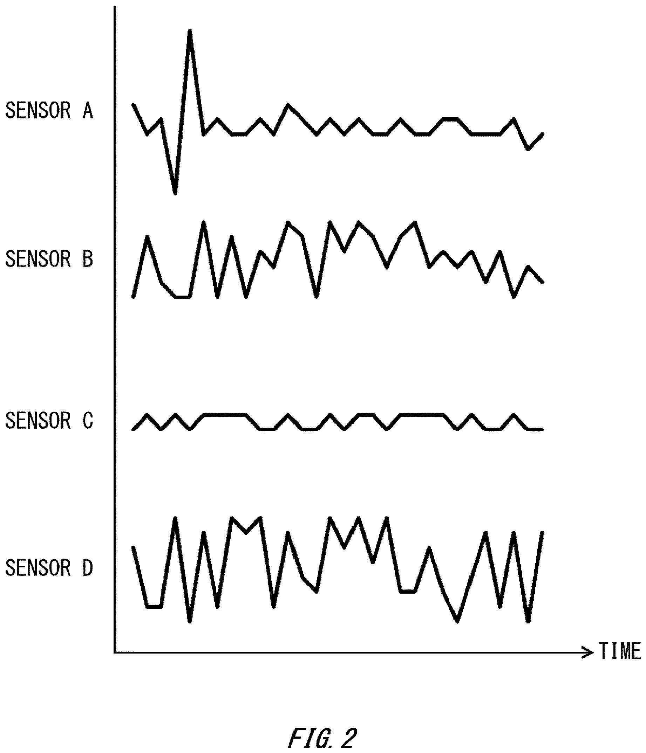

Fig. 2 shows an example of measurement data managed by the data management system 100 according to the aspect of the background of the present invention. In Fig. 2, an example is described where the data management system 100 is configured to manage measurement data from four sensors: a sensor A, a sensor B, a sensor C, and a sensor D.
However, it is not limited thereto. The data management system 100 may manage measurement data from more than four sensors, or may manage measurement data from one or less than four sensors.

The types of the plurality of sensors here may be each the same. That is, all of the sensor A to the sensor D may be able to acquire measurement data of the same type (for example, a temperature or the like). Instead, the types of the plurality of sensors may be partly or wholly different. That is, some of the sensor A to the sensor D may be able to acquire measurement data of different types (for example, a temperature and pressure or the like), and all of the sensor A to the sensor D may be able to acquire measurement data of different types (a temperature, pressure, a fluid flow, and acceleration or the like).

Fig. 2 shows, in order from the top, measurement data from the sensor A, the sensor B, the sensor C, and the sensor D during a predetermined period in time series. During the period here, the sensor D has the greatest variance, the sensor B has the second greatest variance, the sensor A has the third greatest variance, and the sensor C has the smallest variance of the measurement data. Note that such variance may be an index for indicating a degree of dispersion of the time series data for each sensor, and may be calculated by averaging of the square of the difference between the individual data and the mean value, for example. Moreover, during the period, the sensor A has the greatest variation, the sensor D has the second greatest variation, the sensor B has the third greatest variation, and the sensor C has the smallest variation of the measurement data. Note that such variation may be an index for indicating a degree of relative dispersion of the time series data for each sensor, and, for example, may be calculated by dividing the standard deviation by the mean value.

For example, the data management system 100 according to the aspect of the background of the present invention is configured to acquire and record the measurement data as shown in Fig. 2. Then, the data management system 100 is configured to selectively delete the recorded measurement data, when the total capacity of the measurement data recorded in the data storage unit 120 exceeds a predefined upper limit value. This will be described in detail using a flow.

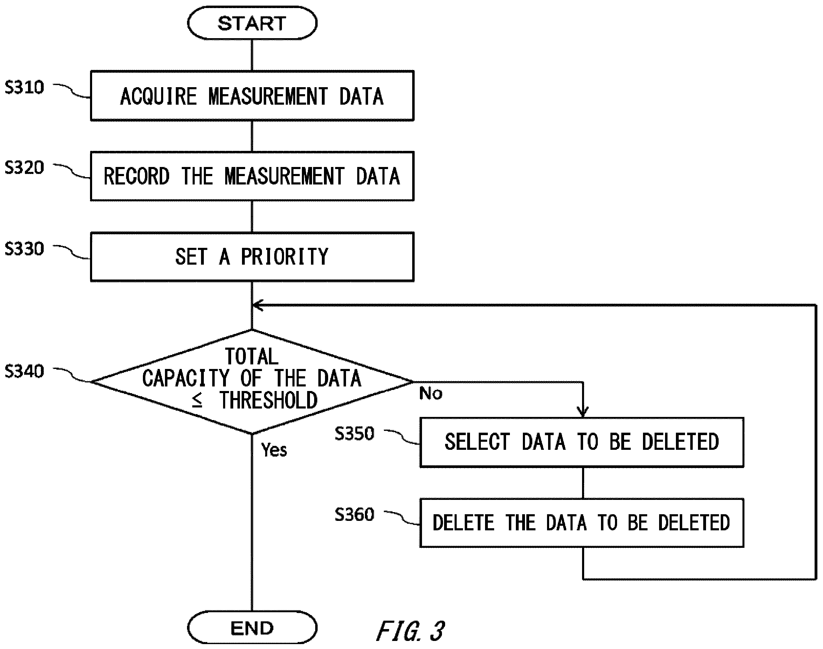

Fig. 3 shows an example of a flow in which the data management system 100 according to the aspect of the background of the present inveniton deletes measurement data.

At Step 310, the data management system 100 acquires, from each of the plurality of sensors, measurement data generated by measuring a measurement target. As an example, the data acquiring unit 110 acquires the measurement data from each of the plurality of sensors (for example, the sensor A, the sensor B, the sensor C, and the sensor D) in time series, via a communication network. The data acquiring unit 110 supplies the measurement data acquired from each of the plurality of sensors to the data storage unit 120.

At Step 320, the data management system 100 records the measurement data. As an example, the data storage unit 120 records, for each sensor in time series, the measurement data acquired from each of the plurality of sensors at Step 310.

At Step 330, the data management system 100 sets a priority to be given to each of the plurality of sensors, based on the measurement data acquired from each of the plurality of sensors. As an example, the priority setting unit 130 accesses the data storage unit 120, and views the measurement data from the plurality of sensors recorded at Step 320. Then, the priority setting unit 130 analyzes the measurement data for each sensor, and set a priority to be given to each of the plurality of sensors based on the analyzed result.

As an example, the priority setting unit 130 calculates, for each of the plurality of sensors, a variance of the measurement data during a predetermined period, and sets a sensor having a smaller variance to be given a lower priority than a sensor having a greater variance. More specifically, for example, the priority setting unit 130 calculates, for each sensor, the variance of the measurement data by averaging the square of the difference between the individual data and the mean value during the predetermined period. Then, for example, when the sensor D has the greatest variance, and the sensor B has the second greatest variance, and the sensor A has the third greatest variance, and the sensor C has the smallest variance of the measurement data, the priority setting unit 130 sets the sensor D to be given a priority 1, the sensor B to be given a priority 2, the sensor A to be given a priority 3, and the sensor C to be given a priority 4. Note that here the priority 1 is the highest priority and the priority 4 is the lowest priority.

Instead, the priority setting unit 130 may calculate, for each of the plurality of sensors, a variation of the measurement data during the predetermined period, and set a sensor having a smaller variation to be given a lower priority than a sensor having a greater variation. More specifically, for example, the priority setting unit 130 calculates, for each sensor, the variation (coefficient of variation) of the measurement data by dividing the standard deviation of the individual data during the predetermined period by the mean value. Then, for example, when the sensor A has the greatest variation, the sensor D has the second greatest variation, the sensor B has the third greatest variation, and the sensor C has the smallest variation of the measurement data, the priority setting unit 130 may set the sensor A to be given a priority 1, the sensor D to be given a priority 2, the sensor B to be given a priority 3, and the sensor C to be given a priority 4.

Note that, in the above description, an example is shown where the priority setting unit 130 is configured to set the priority based on the variance or variation of the measurement data, but it is not limited thereto. The priority setting unit 130 may set a priority, based on any index that can be calculated from the measurement data such as the maximum value, the minimum value and a range (the difference between the maximum value and the minimum value), for example. Moreover, in the above description, an example is shown where the priority setting unit 130 is configured to set the priority based on one index calculated from the measurement data, but it is not limited thereto. The priority setting unit 130 may set the priority based on a scored value obtained by combining a plurality of indices. The priority setting unit 130 supplies information related to the set priority to the data selecting unit 140.

At Step 340, the data management system 100 determines whether the total capacity of the measurement data recorded in the data storage unit 120 at Step 320 is equal to or lower than a predetermined threshold (upper limit value). When it is determined that the total capacity of the measurement data is equal to or lower than the predetermined threshold, the data management system 100 ends the flow.

On the other hand, when it is determined that the total capacity of the measurement data exceeds the predetermined threshold at Step 340, the data management system 100 selects data to be deleted at Step 350. As an example, the data selecting unit 140 refers to information related to the priority set at Step 330 and selects the data to be deleted from among the measurement data according to the priority for each of the plurality of sensors. In doing so, the data selecting unit 140 may preferentially select, as the data to be deleted, the measurement data acquired from a sensor with a lower priority, for example, the sensor C for which the priority 4 is set. The data selecting unit 140 supplies information related to the selected data to be deleted to the data deleting unit 150.

At Step 360, the data management system 100 deletes the data to be deleted. As an example, the data deleting unit 150 deletes the measurement data selected as the data to be deleted at Step 350, among the measurement data recorded at Step 320.

Then, the data management system 100 returns the process to Step 340. That is, at Step 340, the data management system 100 determines again whether the total capacity of the measurement data after deleting the data to be deleted at Step 360 is equal to or lower than the predetermined threshold. When it is determined that the total capacity of the measurement data still exceeds the predetermined threshold at Step 340, the data management system 100 selects data to be deleted again at Step 350. As an example, the data selecting unit 140 may refer to information related to the priority set at Step 330, and select, as the data to be deleted, the measurement data acquired from a sensor having the second lowest priority, for example, a sensor for which the priority 3 is set. Then, at Step 360, the data management system 100 deletes the measurement data acquired from the sensor for which the priority 3 is set. The data management system 100 repeats such process until the total capacity of the measurement data becomes equal to or lower than the predetermined threshold.

It is expected that an amount of data will explosively increase, for example, when a process control system in the OT (Operational Technology) region is coupled to a system in the IT (Information Technology) region or the like. In such situation, recording all of the data is not realistic, and reducing the amount of data or selecting and discarding the data is required. Conventionally, a data management apparatus for deleting sensor data according to a saving priority order is known. In the data management apparatus, an evaluation index is calculated by using the sensor data, and, at a point where a degree of change of the evaluation index is large, the saving priority order of the sensor data is raised so that the sensor data is not easily deleted and, at a point where the degree of change is small, the saving priority order of the sensor data is lowered so that the sensor data is easily deleted. That is, the conventional data management apparatus focuses on one sensor data and is configured to preferentially delete, among the sensor data in time series, sensor data in a period where the degree of change is small than sensor data in a period where the degree of change is large. However, the conventional data management apparatus cannot delete sensor data by a unit of sensor.

In contrast, the data management system 100 according to the present aspect is configured to set a priority to be given to each of the plurality of sensors based on the measurement data acquired from each of the plurality of sensors, and selectively delete the measurement data according to the priority for each sensor. Thus, the data management system 100 according to the present aspect can selectively delete measurement data from a sensor with a low priority, and more efficiently leave measurement data from a sensor with a high priority on record.

Moreover, the data management system 100 according to the present aspect is configured to set a sensor having a smaller variance of measurement data to be given a lower priority than a sensor having a greater variance. Thus, the data management system 100 according to the present aspect can, for example, when the data management system 100 acquired measurement data from each of a plurality of sensors of the same type, preferentially delete the measurement data from a sensor which has a small dispersion and is expected to have no high importance (user's interest is low) among the plurality of sensors.

Note that, when the types of the plurality of sensors are each different, the measurement data from the plurality of sensors each have different units and sizes. Then, for example, a data group having larger values for the individual data, i.e. having a larger mean value, may have a greater variance than a data group having a smaller mean value. In such case, analyzing the dispersion for each sensor data using the variance is not necessarily effective. In contrast, the data management system 100 according to the present aspect is configured to set a sensor having a smaller variation of the measurement data to be given a lower priority than a sensor having a greater variation. Thus, the data management system 100 according to the present aspect can, for example, even when the data management system 100 acquired measurement data from each of a plurality of sensors of the different types, preferentially delete the measurement data from a sensor which has a relatively small dispersion and is expected to have no high importance among the plurality of sensors.

Note that, in the above description, an example is shown where the priority setting unit 130 is configured to set the priority based on a statistics (the variance or variation) of the measurement data from the plurality of sensors. However, it is not limited thereto. The priority setting unit 130 may calculate, for each of the plurality of sensors, the difference between estimation data estimated and the measurement data, and set a sensor having a smaller difference to be given a lower priority than a sensor having a greater difference.

As an example, the priority setting unit 130 may estimate, for each of the plurality of sensors, the next data from data obtained in the past. For example, the priority setting unit 130 may estimate a value of the next data by adding the difference between the preceding data and the current data to the current data. Moreover, the priority setting unit 130 may estimate a value of the next data by focusing on a periodicity of the data obtained in the past. Then, the priority setting unit 130 may calculate, for each of the plurality of sensors, the difference between estimation data thus estimated and the measurement data actually obtained, and set a sensor having a smaller difference to be given a lower priority than a sensor having a greater difference.

Moreover, the priority setting unit 130 may estimate, for each of the plurality of sensors, a value of data of a target sensor from data obtained from other sensors. The measurement data from the plurality of sensors may have mutual dependency. For example, there is a case where a value of pressure data can be estimated to some extent from fluid flow data and temperature data obtained at surrounding locations. Therefore, for example, the priority setting unit 130 may estimate a value of data of a target sensor from values of one or plurality of sensors at locations surrounding the target sensor, by interpolating the values of the sensors. Then, the priority setting unit 130 may calculate, for each of the plurality of sensors, the difference between estimation data thus estimated and the measurement data actually obtained, and set a sensor having a smaller difference to be given a lower priority than a sensor having a greater difference.

Moreover, the priority setting unit 130 may estimate, for each of the plurality of sensors, a value of data of a target sensor from a simulated result. For example, the priority setting unit 130 is configured to acquire, for each of the plurality of sensors, data estimated with high accuracy by using a simulator (not shown). Then, the priority setting unit 130 may calculate, for each of the plurality of sensors, the difference between estimation data thus estimated and the measurement data actually obtained, and set a sensor having a smaller difference to be given a lower priority than a sensor having a greater difference.

In this manner, the data management system 100 according to the present aspect may preferentially delete the measurement data from a sensor having a smaller difference between the estimation data and the measurement data than the measurement data from a sensor having a greater difference. Thus, the data management system 100 according to the present embodiment can preferentially delete the measurement data from a sensor that is easily estimated (that can be estimated with high accuracy) among the plurality of sensors.

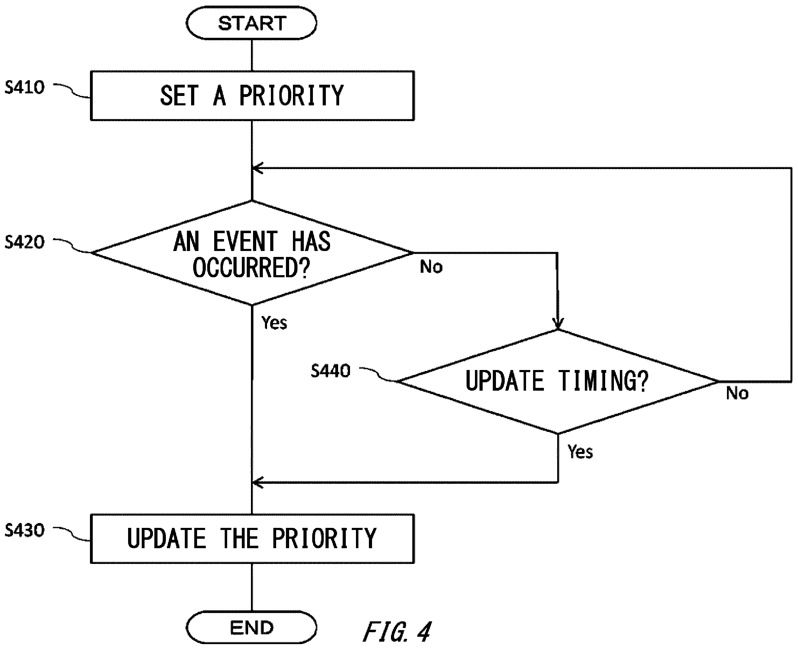

Fig. 4 shows an example of a flow in which the data management system 100 according to the present aspect of the background of the present invention updates the priority. As shown in Fig. 4, the data management system 100 according to the present aspect may be configured to update the priority for each sensor.

At Step 410, the data management system 100 sets a priority to be given to each of the plurality of sensors. Step 410 is the same process as the Step 330 and therefore its description is omitted.

At Step 420, the data management system 100 determines whether a predetermined event has occurred. As an example, the data management system 100 determines whether the predetermined event has occurred, according to whether an abnormality has occurred in the measurement target. For example, the data management system 100 may determine that the predetermined event has occurred when the data management system 100 receives, from a user or another system, an indicator indicating an abnormality has occurred. Instead, the data management system 100 may spontaneously determine that an abnormality has occurred from measurement data acquired from the plurality of sensors. In this case, for example, the data management system 100 may determine that an abnormality has occurred in the measurement target when the data management system 100 calculates a Mahalanobis distance by MT (Maharanobis-Taguchi) method from the measurement data acquired from the plurality of sensors and the Mahalanobis distance exceeds a predetermined threshold.

When it is determined that the predetermined event has occurred at Step 420, the data management system 100 updates the priority at Step 430. That is, the priority setting unit 130 dynamically updates the priority for each of the plurality of sensors. In doing so, the priority setting unit 130 may be configured to change the criterion for setting the priority before or after the occurrence of the event. For example, when the measurement target is in a normal state, a single change in the measurement data is unlikely to be a noise. On the other hand, when the measurement target is in an abnormal state, a continuous change in the measurement data may be likely to be important data. In this manner, the importance of the measurement data may change before or after the occurrence of the event. Therefore, it is preferable that the priority setting unit 130 changes the criterion for setting a high priority for what sensor before or after the occurrence of the event. Note that, in the above description, an example is shown where the data management system 100 is configured to update the priority when an abnormality has occurred in the measurement target, but it is not limited thereto. For example, the data management system 100 may update the priority when any of various events has occurred, such as when the data management system 100 receives a priority update request from the user or another system, when a disaster such as an earthquake has occurred, and when raw materials are changed. Thus, the data management system 100 can change the priority according to a condition such as the difference of raw materials (for example, oil fields).

When it is determined that the predetermined event has not occurred at Step 420, the data management system 100 determines whether it is a predetermined update timing at Step 440. As an example, the data management system 100 may determine whether it is the update timing according to whether the elapsed time since the previous setting of the priority exceeds a predetermined time.

When it is determined that it is not the predetermined update timing at Step 440, the data management system 100 returns the process to Step 420 and continues the flow. On the other hand, when it is determined that it is the predetermined update timing at Step 440, the data management system 100 updates the priority at Step 430. Note that, also in this case, the priority setting unit 130 may change the criterion for setting the priority before or after the update timing. That is, the priority setting unit 130 may change the criterion for setting the priority according to the lapse of time. Thus, the data management system 100 can periodically change the priority every fixed period, or, for example, can change the priority by any time (for example, by day and by night).

In this manner, the data management system 100 according to the present aspect dynamically updates the priority for each of the plurality of sensors. Thus, the data management system 100 according to the present aspect can update the priority according to occurrence of any of various events or periodically.

In the above description, an example is shown where the data management system 100 according to the background of the present invention is configured to completely delete the data to be deleted from the storage area in the system. However, it is not limited thereto.

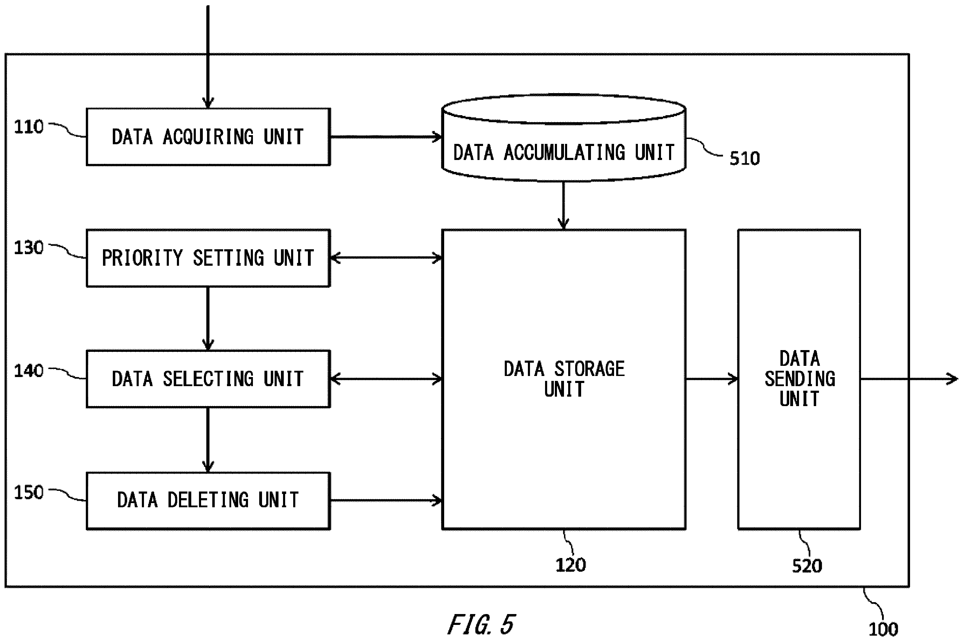

Fig. 5 shows an example of a block diagram of the data management system 100 according to a present embodiment. In Fig. 5, components having the same function and configuration as in Fig. 1 are given the same reference numerals, and the following describes only differing points. For example, the data management system 100 according to the present variant may be provided in an OT region, and may be able to send measurement data acquired from a sensor provided in the OT region to another system or apparatus provided in an IT region. The data management system 100 according to the present variant further comprises a data accumulating unit 510 and a data sending unit 520.

In the data management system 100 according to the present variant, the data acquiring unit 110 is configured to supply the measurement data acquired from each of the plurality of sensors to the data accumulating unit 510 instead of the data storage unit 120.

The data accumulating unit 510 is configured to accumulate the measurement data. As an example, the data accumulating unit 510 may be configured to record, for each sensor in time series, all of the measurement data supplied from the data acquiring unit 110. Then, the data accumulating unit 510 is configured to supply, among the accumulated measurement data, target measurement data to be sent to another system or apparatus to the data storage unit 120. Note that such target to be sent may be selected based on a user input or may be automatically selected by the data management system 100, for example.

Therefore, in the data management system 100 according to the present variant, the data storage unit 120 is configured to record, among the measurement data acquired from each of the plurality of sensors, target measurement data to be sent to another system or apparatus.

Moreover, in the data management system 100 according to the present variant, the data deleting unit 150 is configured to delete, among the target measurement data to be sent that are recorded in the data storage unit 120, measurement data selected as data to be deleted.

Then, the data sending unit 520 is configured to send the measurement data recorded in the data storage unit 120 after deleting the data to be deleted, i.e., the target measurement data to be sent from which the data to be deleted is deleted, to another system or apparatus via a network or the like.

In this manner, the data management system 100 according to the present variant is configured to delete the data to be deleted from the target measurement data to be sent. Thus, the data management system 100 according to the present variant can reduce an amount of data to be sent from the data management system 100, for example, when sending the measurement data from the OT region to the IT region. That is, in the data management system 100 according to the present embodiment, deleting the data to be deleted may include, in a broad sense, besides completely deleting the data to be deleted from the storage area, excluding the data to be deleted from the target to be sent to another system or apparatus.

Various embodiments of the present invention may be described with reference to flowcharts and block diagrams whose blocks may represent (1) steps of processes in which operations are performed or (2) sections of devices responsible for performing operations. Certain steps and sections may be implemented by dedicated circuitry, programmable circuitry supplied with computer readable instructions stored on computer readable media, and/or processors supplied with computer readable instructions stored on computer readable media. Dedicated circuitry may include digital and/or analog hardware circuits and may include integrated circuits (IC) and/or discrete circuits. Programmable circuitry may include reconfigurable hardware circuits comprising logical AND, OR, XOR, NAND, NOR, and other logical operations, flip-flops, registers, memory elements, etc., such as field-programmable gate arrays (FPGA), programmable logic arrays (PLA), etc.

Computer readable media may include any tangible device that can store instructions for execution by a suitable device, such that the computer readable medium having instructions stored therein comprises an article of manufacture including instructions which can be executed to create means for performing operations specified in the flowcharts or block diagrams. Examples of computer readable media may include an electronic storage medium, a magnetic storage medium, an optical storage medium, an electromagnetic storage medium, a semiconductor storage medium, etc. More specific examples of computer readable media may include a Floppy (registered trademark) disk, a diskette, a hard disk, a random access memory (RAM), a read-only memory (ROM), an erasable programmable read-only memory (EPROM or Flash memory), an electrically erasable programmable read-only memory (EEPROM), a static random access memory (SRAM), a compact disc read-only memory (CD-ROM), a digital versatile disk (DVD), a Blu-ray (registered trademark) disc, a memory stick, an integrated circuit card, etc.

Computer readable instructions may include assembler instructions, instruction-set-architecture (ISA) instructions, machine instructions, machine dependent instructions, microcode, firmware instructions, state-setting data, or either source code or object code written in any combination of one or more programming languages, including an object oriented programming language such as Smalltalk (registered trademark), JAVA (registered trademark), C++, etc., and conventional procedural programming languages, such as the "C" programming language or similar programming languages.

Computer readable instructions may be provided to a processor of a general purpose computer, special purpose computer, or other programmable data processing apparatus, or to programmable circuitry, locally or via a local area network (LAN), a wide area network (WAN) such as the Internet, etc., to execute the computer readable instructions to create means for performing operations specified in the flowcharts or block diagrams. Examples of processors include computer processors, processing units, microprocessors, digital signal processors, controllers, microcontrollers, etc.

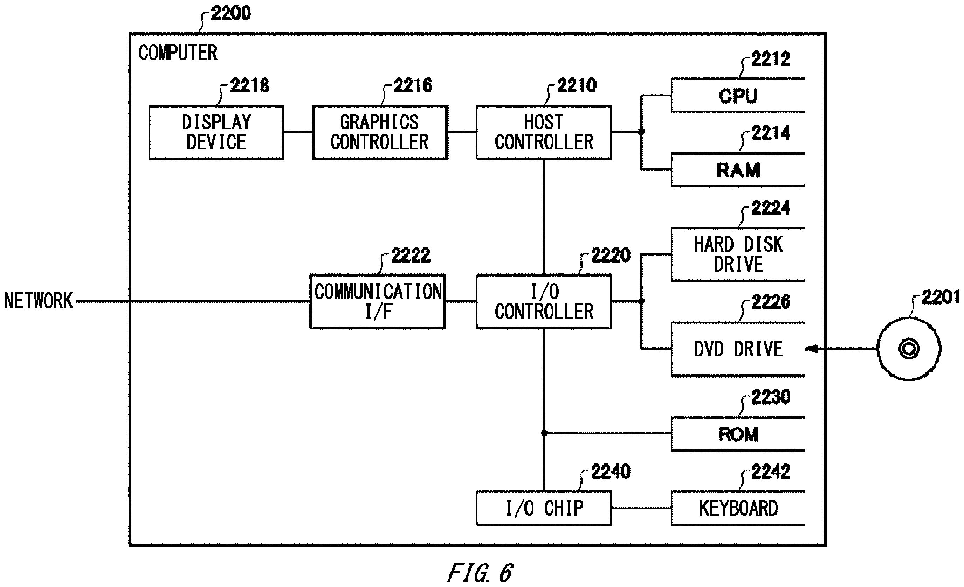

FIG. 6 shows an example of a computer 2200 in which aspects of the present invention may be wholly or partly embodied. A program that is installed in the computer 2200 can cause the computer 2200 to function as or perform operations associated with apparatuses of the embodiments of the present invention or one or more sections thereof, and/or cause the computer 2200 to perform processes of the embodiments of the present invention or steps thereof. Such a program may be executed by a CPU 2212 to cause the computer 2200 to perform certain operations associated with some or all of the blocks of flowcharts and block diagrams described herein.

The computer 2200 according to the present embodiment includes the CPU 2212, a RAM 2214, a graphics controller 2216, and a display device 2218, which are mutually connected by a host controller 2210. The computer 2200 also includes input/output units such as a communication interface 2222, a hard disk drive 2224, a DVD-ROM drive 2226 and an IC card drive, which are connected to the host controller 2210 via an input/output controller 2220. The computer also includes legacy input/output units such as a ROM 2230 and a keyboard 2242, which are connected to the input/output controller 2220 through an input/output chip 2240.

The CPU 2212 operates according to programs stored in the ROM 2230 and the RAM 2214, thereby controlling each unit. The graphics controller 2216 obtains image data generated by the CPU 2212 on a frame buffer or the like provided in the RAM 2214 or in itself, and causes the image data to be displayed on the display device 2218.

The communication interface 2222 communicates with other electronic devices via a network. The hard disk drive 2224 stores programs and data used by the CPU 2212 within the computer 2200. The DVD-ROM drive 2226 reads the programs or the data from the DVD-ROM 2201, and provides the hard disk drive 2224 with the programs or the data via the RAM 2214. The IC card drive reads programs and data from an IC card, and/or writes programs and data into the IC card.

The ROM 2230 stores therein a boot program or the like executed by the computer 2200 at the time of activation, and/or a program depending on the hardware of the computer 2200. The input/output chip 2240 may also connect various input/output units via a parallel port, a serial port, a keyboard port, a mouse port, and the like to the input/output controller 2220.

A program is provided by computer readable media such as the DVD-ROM 2201 or the IC card. The program is read from the computer readable media, installed into the hard disk drive 2224, RAM 2214, or ROM 2230, which are also examples of computer readable media, and executed by the CPU 2212. The information processing described in these programs is read into the computer 2200, resulting in cooperation between a program and the above-mentioned various types of hardware resources. An apparatus or method may be constituted by realizing the operation or processing of information in accordance with the usage of the computer 2200.

For example, when communication is performed between the computer 2200 and an external device, the CPU 2212 may execute a communication program loaded onto the RAM 2214 to instruct communication processing to the communication interface 2222, based on the processing described in the communication program. The communication interface 2222, under control of the CPU 2212, reads transmission data stored on a transmission buffering region provided in a recording medium such as the RAM 2214, the hard disk drive 2224, the DVD-ROM 2201, or the IC card, and sends the read transmission data to a network or writes reception data received from a network to a reception buffering region or the like provided on the recording medium.

In addition, the CPU 2212 may cause all or a necessary portion of a file or a database to be read into the RAM 2214, the file or the database having been stored in an external recording medium such as the hard disk drive 2224, the DVD-ROM drive 2226 (DVD-ROM 2201), the IC card, etc., and perform various types of processing on the data on the RAM 2214. The CPU 2212 may then write back the processed data to the external recording medium.

Various types of information, such as various types of programs, data, tables, and databases, may be stored in the recording medium to undergo information processing. The CPU 2212 may perform various types of processing on the data read from the RAM 2214, which includes various types of operations, processing of information, condition judging, conditional branch, unconditional branch, search/replace of information, etc., as described throughout this disclosure and designated by an instruction sequence of programs, and writes the result back to the RAM 2214. In addition, the CPU 2212 may search for information in a file, a database, etc., in the recording medium. For example, when a plurality of entries, each having an attribute value of a first attribute associated with an attribute value of a second attribute, are stored in the recording medium, the CPU 2212 may search for an entry matching the condition whose attribute value of the first attribute is designated, from among the plurality of entries, and read the attribute value of the second attribute stored in the entry, thereby obtaining the attribute value of the second attribute associated with the first attribute satisfying the predetermined condition.

The above-explained program or software modules may be stored in the computer readable media on or near the computer 2200. In addition, a recording medium such as a hard disk or a RAM provided in a server system connected to a dedicated communication network or the Internet can be used as the computer readable media, thereby providing the program to the computer 2200 via the network.

While the embodiments of the present invention have been described, the technical scope of the invention is not limited to the above described embodiments. It is apparent to persons skilled in the art that various alterations and improvements can be added to the above-described embodiments. It is also apparent from the scope of the claims that the embodiments added with such alterations or improvements can be included in the technical scope of the invention.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process.

### EXPLANATION OF REFERENCES

100: data management system
110: data acquiring unit
120: data storage unit
130: priority setting unit
140: data selecting unit
150: data deleting unit
510: data accumulating unit
520: data sending unit
2200: computer
2201: DVD-ROM
2210: host controller
2212: CPU
2214: RAM
2216: graphics controller
2218: display device
2220: input/output controller
2222: communication interface
2224: hard disk drive
2226: DVD-ROM drive
2230: ROM
2240: input/output chip
2242: keyboard

## Claims

1. A system provided in an OT (Operational Technology) region, comprising:
a data acquiring unit (110) for acquiring via a communication network, from each of a plurality of sensors, provided in the OT region, measurement data generated by measuring a measurement target;
a data storage unit (120) for recording the measurement data;
a priority setting unit (130) for setting a priority to be given to each of the plurality of sensors, based on the measurement data acquired from each of the plurality of sensors, wherein the priority setting unit (130) is configured to calculate a difference between estimation data estimated and the measurement data for each of the plurality of sensors, and set a sensor having a smaller difference to be given a lower priority than a sensor having a greater difference, wherein the priority setting unit (130) is configured to estimate, for each of the plurality of sensors, a value of data of a target sensor from data obtained from other sensors, wherein the priority setting unit (130) is configured to estimate a value of data of the target sensor from values of a plurality of the other sensors at locations surrounding the target sensor, by interpolating the values of the other sensors;
a data selecting unit (140) for selecting data to be deleted from among the measurement data, according to the priority for each of the plurality of sensors, wherein the data selecting unit (140) is configured to preferentially select the measurement data acquired from the sensor with a low priority as the data to be deleted; and
a data deleting unit (150) for deleting the selected data to be deleted; and
a data sending unit (520) for sending the measurement data after deleting the selected data to be deleted to another system or apparatus provided in an IT (Information Technology) region.

2. The system according to claim 1, wherein the priority setting unit (130) is configured to dynamically update the priority for each of the plurality of sensors.

3. The system according to claim 2, wherein the priority setting unit (130) is configured to update the priority for each of the plurality of sensors at a predetermined timing.

4. The system according to claim 3, wherein the priority setting unit (130) is configured to change a criterion for setting the priority before or after the predetermined timing.

5. The system according to any one of claims 2 to 4, wherein the priority setting unit (130) is configured to update the priority for each of the plurality of sensors in response to occurrence of a predetermined event.

6. The system according to claim 5, wherein the priority setting unit (130) is configured to change the criterion for setting the priority before or after the occurrence of the predetermined event.

7. A computer implemented method comprising:
acquiring via a communication network, from each of a plurality of sensors provided in an OT (Operational Technology) region, measurement data generated by measuring a measurement target;
recording the measurement data;
setting a priority to be given to each of the plurality of sensors, based on the measurement data acquired from each of the plurality of sensors, wherein setting a priority includes calculating a difference between estimation data estimated and the measurement data for each of the plurality of sensors, and setting a sensor having a smaller difference to be given a lower priority than a sensor having a greater difference, wherein, for each of the plurality of sensors, a value of data of a target sensor from data obtained from other sensors is estimated, wherein a value of data of the target sensor is estimated from values of a plurality of the other sensors at locations surrounding the target sensor, by interpolating the values of the other sensors;
selecting data to be deleted from among the measurement data, according to the priority for each of the plurality of sensors, wherein selecting data includes preferentially select the measurement data acquired from the sensor with a low priority as the data to be deleted;
deleting the selected data to be deleted; and
sending the measurement data after deleting the selected data to be deleted to another system or apparatus provided in an IT (Information Technology) region.

## Patentansprüche

1. System, das in einem OT-(Operative Technologie)-Bereich vorgesehen ist, mit:
einer Datenbezugseinheit (110) zum Beziehen von Messdaten, die durch Messen eines Messziels erzeugt werden, von jedem einer Mehrzahl von Sensoren, die in dem OT-Bereich vorgesehen sind, über ein Kommunikationsnetzwerk;
einer Datenspeichereinheit (120) zum Aufzeichnen der Messdaten;
einer Prioritätsfestlegeinheit (130) zum Festlegen einer Priorität, die jedem der Mehrzahl von Sensoren zu geben ist, basierend auf den von jedem der Mehrzahl von Sensoren bezogenen Messdaten, wobei die Prioritätsfestlegeinheit (130) konfiguriert ist, um eine Differenz zwischen geschätzten Schätzdaten und den Messdaten für jeden der Mehrzahl von Sensoren zu berechnen, und einen Sensor, der eine kleinere Differenz hat, so festzulegen, dass diesem eine niedrigere Priorität gegeben wird als einem Sensor, der eine größere Differenz hat, wobei die Prioritätsfestlegeinheit (130) konfiguriert ist, um einen Wert von Daten eines Zielsensors aus Daten, die von anderen Sensoren erhalten werden, für jeden der Mehrzahl von Sensoren zu schätzen, wobei die Prioritätsfestlegeinheit (130) konfiguriert ist, um einen Wert von Daten des Zielsensors aus Werten einer Mehrzahl der anderen Sensoren an Stellen zu schätzen, die den Zielsensor umgeben, durch Interpolieren der Werte der anderen Sensoren;
einer Datenauswahleinheit (140) zum Auswählen von zu löschenden Daten unter den Messdaten gemäß der Priorität für jeden der Mehrzahl von Sensoren, wobei die Datenauswahleinheit (140) konfiguriert ist, um bevorzugt die Messdaten auszuwählen, die von dem Sensor mit einer niedrigen Priorität als die zu löschende Daten bezogen werden; und
einer Datenlöscheinheit (150) zum Löschen der ausgewählten zu löschenden Daten; und
einer Datensendeeinheit (520) zum Senden der Messdaten nach dem Löschen der ausgewählten zu löschenden Daten an ein anderes System oder Vorrichtung, die in einem IT-(Informationstechnologie)-Bereich vorgesehen sind.

2. System nach Anspruch 1, wobei die Prioritätsfestlegeinheit (130) konfiguriert ist, um die Priorität für jeden der Mehrzahl von Sensoren dynamisch zu aktualisieren.

3. System nach Anspruch 2, wobei die Prioritätsfestlegeinheit (130) konfiguriert ist, um die Priorität für jeden der Mehrzahl von Sensoren zu einer vorgegebenen Zeit zu aktualisieren.

4. System nach Anspruch 3, wobei die Prioritätsfestlegeinheit (130) konfiguriert ist, um ein Kriterium zum Festlegen der Priorität vor oder nach der vorgegebenen Zeit zu ändern.

5. System nach einem der Ansprüche 2 bis 4, wobei die Prioritätsfestlegeinheit (130) konfiguriert ist, um die Priorität für jeden der Mehrzahl von Sensoren als Reaktion auf das Auftreten eines vorgegebenen Ereignisses zu aktualisieren.

6. System nach Anspruch 5, wobei die Prioritätsfestlegeinheit (130) konfiguriert ist, um das Kriterium zum Festlegen der Priorität vor oder nach dem Auftreten des vorgegebenen Ereignisses zu ändern.

7. Computerimplementiertes Verfahren mit:
Beziehen von Messdaten, die durch Messen eines Messziels erzeugt werden, von jedem einer Mehrzahl von Sensoren, die in einem OT-(Operative Technologie)-Bereich vorgesehen sind, über ein Kommunikationsnetzwerk;
Aufzeichnen der Messdaten;
Festlegen einer Priorität, die jedem der Mehrzahl von Sensoren zu geben ist, basierend auf den von jedem der Mehrzahl von Sensoren bezogenen Messdaten, wobei das Festlegen der Priorität ein Berechnen einer Differenz zwischen geschätzten Schätzdaten und den Messdaten für jeden der Mehrzahl von Sensoren enthält, und ein Festlegen eines Sensors, der eine kleinere Differenz hat, enthält, derart, dass diesem eine niedrigere Priorität gegeben wird als einem Sensor, der eine größere Differenz hat, wobei ein Wert von Daten eines Zielsensors aus Daten, die von anderen Sensoren erhalten werden, für jeden der Mehrzahl von Sensoren geschätzt wird, wobei ein Wert von Daten des Zielsensors aus Werten einer Mehrzahl der anderen Sensoren an Stellen geschätzt wird, die den Zielsensor umgeben, durch Interpolieren der Werte der anderen Sensoren;
Auswählen von zu löschenden Daten unter den Messdaten, gemäß der Priorität für jeden der Mehrzahl von Sensoren, wobei ausgewählte Daten das bevorzugte Auswählen der Messdaten enthält, die von dem Sensor mit einer niedrigen Priorität als die zu löschende Daten bezogen werden;
Löschen der ausgewählten zu löschenden Daten; und
Senden der Messdaten nach dem Löschen der ausgewählten zu löschenden Daten an ein anderes System oder Vorrichtung, die in einem IT-(Informationstechnologie)-Bereich vorgesehen sind.

## Revendications

1. Système prévu dans une région de TO (technologie opérationnelle), comprenant :
une unité d'acquisition de données (110) pour acquérir via un réseau de communication, à partir de chacun d'une pluralité de capteurs, prévus dans la région de TO, des données de mesure générées en mesurant une cible de mesure ;
une unité de stockage de données (120) pour enregistrer les données de mesure ;
une unité de définition de priorité (130) pour définir une priorité devant être donnée à chacun de la pluralité de capteurs, sur la base des données de mesure acquises à partir de chacun de la pluralité de capteurs, dans lequel l'unité de définition de priorité (130) est configurée pour calculer une différence entre des données d'estimation estimées et les données de mesure pour chacun de la pluralité de capteurs, et définir un capteur présentant une plus petite différence auquel doit être donnée une priorité plus basse qu'un capteur présentant une plus grande différence, dans lequel l'unité de définition de priorité (130) est configurée pour estimer, pour chacun de la pluralité de capteurs, une valeur de données d'un capteur cible à partir de données obtenues à partir d'autres capteurs, dans lequel l'unité de définition de priorité (130) est configurée pour estimer une valeur de données du capteur cible à partir de valeurs d'une pluralité des autres capteurs à des emplacements entourant le capteur cible, en interpolant les valeurs des autres capteurs ;
une unité de sélection de données (140) pour sélectionner des données devant être supprimées parmi les données de mesure, conformément à la priorité pour chacun de la pluralité de capteurs, dans lequel l'unité de sélection de données (140) est configurée pour sélectionner préférentiellement les données de mesure acquises à partir du capteur avec une priorité basse en tant que données devant être supprimées ; et
une unité de suppression de données (150) pour supprimer les données sélectionnées devant être supprimées ; et
une unité d'envoi de données (520) pour envoyer les données de mesure après la suppression des données sélectionnées devant être supprimées à un autre système ou appareil prévu dans une région de TI (technologie de l'information).

2. Système selon la revendication 1, dans lequel l'unité de définition de priorité (130) est configurée pour mettre à jour dynamiquement la priorité pour chacun de la pluralité de capteurs.

3. Système selon la revendication 2, dans lequel l'unité de définition de priorité (130) est configurée pour mettre à jour la priorité pour chacun de la pluralité de capteurs à un moment prédéterminé.

4. Système selon la revendication 3, dans lequel l'unité de définition de priorité (130) est configurée pour changer un critère pour définir la priorité avant ou après le moment prédéterminé.

5. Système selon l'une quelconque des revendications 2 à 4, dans lequel l'unité de définition de priorité (130) est configurée pour mettre à jour la priorité pour chacun de la pluralité de capteurs en réponse à la survenue d'un événement prédéterminé.

6. Système selon la revendication 5, dans lequel l'unité de définition de priorité (130) est configurée pour changer le critère pour définir la priorité avant ou après la survenue de l'événement prédéterminé.

7. Procédé mis en oeuvre par ordinateur comprenant :
une acquisition via un réseau de communication, à partir de chacun d'une pluralité de capteurs prévus dans une région de TO (technologie opérationnelle), de données de mesure générées en mesurant une cible de mesure ;
un enregistrement des données de mesure ;
une définition d'une priorité devant être donnée à chacun de la pluralité de capteurs, sur la base des données de mesure acquises à partir de chacun de la pluralité de capteurs, dans lequel la définition d'une priorité inclut un calcul d'une différence entre des données d'estimation estimées et les données de mesure pour chacun de la pluralité de capteurs, et une définition d'un capteur présentant une plus petite différence auquel doit être donnée une priorité plus basse qu'un capteur présentant une plus grande différence, dans lequel, pour chacun de la pluralité de capteurs, une valeur de données d'un capteur cible à partir de données obtenues à partir d'autres capteurs est estimée, dans lequel une valeur de données du capteur cible est estimée à partir de valeurs d'une pluralité des autres capteurs à des emplacements entourant le capteur cible, en interpolant les valeurs des autres capteurs ;
une sélection de données devant être supprimées parmi les données de mesure, conformément à la priorité pour chacun de la pluralité de capteurs, dans lequel la sélection de données inclut sélectionner préférentiellement les données de mesure acquises à partir du capteur avec une priorité basse en tant que données devant être supprimées ;
une suppression des données sélectionnées devant être supprimées ; et
un envoi des données de mesure après suppression des données sélectionnées devant être supprimées à un autre système ou appareil prévu dans une région de TI (technologie de l'information).
